# EUROPEAN PATENT APPLICATION

(11) **EP 4 835 682 A1**
(43) Date of publication of application: **04.11.2026**
(21) Application number: 24910545.3
(22) Date of filing: 02.12.2024
(51) Int. Cl.: G06F 16/23

(54) **PROCESS DATABASE AND ESTABLISHMENT METHOD THEREFOR, MACHINING METHOD, RELATED APPARATUS, AND MEDIUM**

(30) Priority: 26.12.2023 CN 202311818739
(71) Applicant: Intelligent Grinding Technology (Shenzhen) Co., Ltd., Shenzhen, Guangdong 518000 (CN)
(72) Inventor: WANG, Jinsheng, Shenzhen, Guangdong 518000 (CN); BI, Xuefeng, Shenzhen, Guangdong 518000 (CN); HUANG, Jie, Shenzhen, Guangdong 518000 (CN)
(74) Representative: Cabinet Chaillot
(86) International application number: PCT/CN2024/136066
(87) International publication number: WO 2025/139613

(57) **Abstract**

The present application is applicable to the field of intelligent manufacturing, which provides a processing database, a method for establishing the same, a machining method, and related apparatus and medium. The method includes: determining historical machining data from a first database based on a first machining objective of a first workpiece, wherein the historical machining data is data acquired when machining a part of the same type as the first workpiece; machining the first workpiece according to the historical machining data; acquiring first real-time machining data of the first workpiece machined, wherein the first real-time machining data comprises second machining condition data and second quality data; comparing the historical machining data with the first real-time machining data; and correcting or updating the first database based on a comparison result. This solution can improve the reference value of the data within the first database.

## Description

The present application claims priority to Chinese Patent Application No. 202311818739.9, filed on December 27, 2023, entitled "Process Database and Method for Establishing Same, Machining Method, Related Apparatus and Medium", the entire contents of which are incorporated herein by reference.

### FIELD

The present application relates to the field of intelligent manufacturing, and in particular relates to a process database and its establishment method, a machining method, related apparatus and medium.

### BACKGROUND

In recent years, with the development of automation technology, application scenarios of computer numerical control (CNC) machine tools have become increasingly widespread. A CNC machine tool is a machine tool that uses mathematical models and computer control systems to achieve automated machining. When using a CNC machine tool to machine a workpiece, users need to set the machining program. When setting the machining program, it is necessary to pay attention to the impact of machining conditions on the workpiece. Machining conditions can be a representation of factors such as a machining environment and a state of the machining equipment. Machining conditions directly affect the machining quality and efficiency of the workpiece.

With the development of database technology, users can machine workpieces based on their past work experience and upload the machining conditions obtained from such experience to a database for other users to reference. However, many machining conditions set based on experience may result in low machining quality when used for other workpieces due to incomplete data collection of the machining conditions. In addition, the accuracy of machining conditions set based on experience in the database is relatively low, which undermines the database's reference value.

### SUMMARY

This application at least provides a process database and its establishment method, a machining method, related apparatus and medium.

This application provides a method for establishing a process database, comprising the following steps: determining historical machining data from a first database based on a first machining objective of a first workpiece, wherein the historical machining data is data acquired when machining a part of the same type as the first workpiece, the historical machining data comprises first machining condition data and first quality data associated with the first machining condition data, and the first machining condition data comprises cross-correlated first workpiece data, first environmental data, first machining equipment data, and first machining load data; machining the first workpiece according to the historical machining data; acquiring first real-time machining data of the first workpiece machined, wherein the first real-time machining data comprises second machining condition data and second quality data; comparing the historical machining data with the first real-time machining data; and correcting or updating the first database based on a comparison result.

This application provides a process database, which is established using the process database establishment method described above.

This application provides a machining method. The machining method employs a process database as described above. The machining method includes: determining historical machining data from the process database based on a first machining objective of a workpiece to be machined, wherein the workpiece to be machined is a part of the same type as the first workpiece, the historical machining data is data acquired when machining the part of the same type as the first workpiece, the historical machining data comprises first machining condition data and first quality data associated with the first machining condition data, and the first machining condition data comprises cross-correlated first workpiece data, first environmental data, first machining equipment data, and first machining load data; and machining the workpiece to be machined according to the historical machining data.

This application provides an apparatus for establishing a process database, comprising: a determination module, configured to determine historical machining data from a first database based on a first machining objective of a first workpiece, wherein the historical machining data is data acquired when machining a part of the same type as the first workpiece, the historical machining data comprises first machining condition data and first quality data associated with the first machining condition data, and the first machining condition data comprises first workpiece data, first environmental data, first machining equipment data, and first machining load data that are cross-correlated; a machining module, configured to machine the first workpiece according to the historical machining data; an acquisition module, configured to acquire first real-time machining data of the first workpiece machined, wherein the first real-time machining data comprises second machining condition data and second quality data; a comparison module, configured to compare the historical machining data with the first real-time machining data; and a database processing module, configured to correct or update the first database based on a comparison result.

This application provides a terminal device, including a memory, a processor, and a computer program stored in the memory and executable on the processor. When the processor executes the computer program, it implements the above-described process database establishment method or the above-described machining method.

This application provides a computer-readable storage medium storing a computer program. The computer program, when executed by a processor, implements the above-described process database establishment method or the above-described machining method.

In the above scheme, based on a first machining objective of a first workpiece, historical machining data obtained from machining parts of the same type as the first workpiece is determined from the first database. First real-time machining data of the first workpiece machined according to the historical machining data is obtained. The historical machining data is compared with the first real-time machining data, and the first database is corrected or updated based on the comparison result. Compared with directly adding the machining conditions set according to experience to the database, this application can improve the referenceability and accuracy of various data in the first database by correcting or updating the first database based on the comparison result.

It should be understood that the above general description and the following detailed description are for illustrative purposes only, and are not intended to limit this application.

### BRIEF DESCRIPTION OF THE DRAWINGS

The accompanying drawings, which are incorporated in and constitute a part of this specification, illustrate embodiments consistent with this application and, together with the specification, serve to explain the technical solutions of this application.
FIG. 1 is a flowchart illustrating a method for establishing a process database according to one embodiment of this application.
FIG. 2 is a schematic diagram of a first workpiece in one embodiment of the method for establishing the process database provided in this application;
FIG. 3 is a schematic diagram of a structure of a process database according to one embodiment of the present application.
FIG. 4 is a flowchart illustrating a machining method according to one embodiment of the present application.
FIG. 5 illustrates an apparatus for establishing a process database according to one embodiment of the present application.
FIG. 6 is a schematic diagram of a structure of a terminal device according to one embodiment of the present application.
FIG. 7 is a schematic diagram of a structure of a computer-readable storage medium according to one embodiment of the present application.

### DESCRIPTION OF THE EMBODIMENTS

In the following description, specific details such as particular system architectures, interfaces, and technologies are presented for illustrative purposes rather than for limiting purposes, in order to provide a thorough understanding of this application.

In this disclosure, the term "and/or" is merely a description of the relationship between related objects, indicating that three relationships may exist. For example, A and/or B can represent: A existing alone, A and B existing simultaneously, and B existing alone. Additionally, the character "/" generally indicates that the objects before and after it are in an "or" relationship. Furthermore, "plurality" in this disclosure means two or more. Moreover, the term "at least one" in this disclosure refers to any one of a plurality or any combination of at least two of the plurality. For example, including at least one of A, B, and C can mean including any one or more elements selected from the set consisting of A, B, and C.

The method for establishing a process database in this application can be applied to the following industrial internet scenario. In a possible system architecture of an industrial internet scenario, it may include a server, an edge device, and a plurality of CNC machine tools. The server and CNC machine tools can communicate directly, or the server can communicate indirectly with the CNC machine tools through the edge device. In addition, the server can be an industrial cloud platform, a physical server, or an apparatus based on a physical server. The industrial cloud platform can be a public cloud platform or an enterprise private cloud platform. The physical server can be implemented as a single physical server or a server cluster formed by multiple servers. The edge device is used to collect information and serves as an intermediary for communication between the server and the CNC machine tools. A single edge device can correspond to multiple CNC machine tools, or alternatively each edge device corresponds one-to-one with its associated CNC machine tool.

This application provides some methods and apparatus for establishing a process database. The execution entity of the method for establishing a process database can be an apparatus for establishing the process database. For example, the apparatus for establishing the process database can be a terminal device, a server, or other processing device. The terminal device can be a device for establishing the process database, user equipment (UE), a mobile device, a user terminal, a terminal, a cellular phone, a cordless phone, a personal digital assistant (PDA), a handheld device, a computing device, an in-vehicle device, etc. In some possible implementations, the method for establishing a process database can be implemented by a processor calling computer-readable instructions stored in a memory.

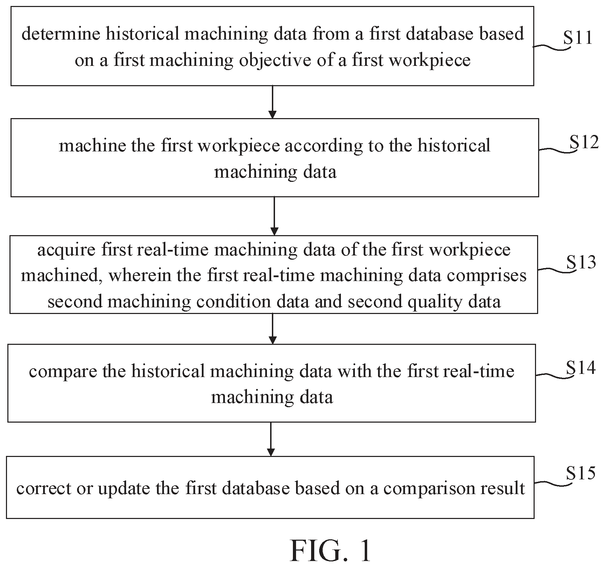

FIG. 1 is a flowchart of a method for establishing a process database in accordance with one embodiment of the present application. Specifically, the method for establishing a process database in this embodiment may include the following steps:

Step S11: determining historical machining data from a first database based on a first machining objective of a first workpiece.

Historical machining data refers to data obtained when machining parts of the same type as the first workpiece (hereinafter referred to as "same-type parts"). The historical machining data includes first machining condition data and first quality data associated with the first machining condition data. The first machining condition data includes cross-correlated first workpiece data, first environmental data, first machining equipment data, and first machining load data.

The first workpiece can be a workpiece to be machined on a CNC machine tool.

The first machining objective can refer to the machining requirements that enable the workpiece to be machined into a final product. For example, the machining requirements can be dimensional requirements, quality requirements, or machining speed requirements of the machined workpiece. A CNC machine tool can use the machining parameters corresponding to the machining requirements to machine the workpiece into a final product. The first database can be a process database storing the machining parameters of the first workpiece. The machining parameters of the first workpiece can be the original data stored in the first database before the first workpiece is machined. For example, the process database establishment apparatus stores data acquired during the machining of same-type parts into the first database, which is the original data stored in the first database before the first workpiece is machined. Same-type parts can refer to parts that are substantially the same as the workpiece in terms of function, shape, material, and standards, and are interchangeable.

The historical machining data in the first database can be data obtained during the machining of same-type parts before the first workpiece is machined. It can be understood that the historical machining data of the first workpiece can be the machining parameters corresponding to the first machining objective of the first workpiece. Before machining the first workpiece, the process database establishment apparatus can use the first machining objective of the first workpiece to determine the historical machining data corresponding to the first workpiece in the first database, wherein the historical machining data corresponding to the first workpiece can be data obtained when machining the same-type parts.

The historical machining data in the first database may include: first machining condition data corresponding to same-type parts and first quality data associated with the first machining condition data. The first quality data may be quality results corresponding to same-type parts. Specifically, the first quality data may refer to evaluation or judgment results made on the quality of the same-type parts based on the inspection and testing of measured data output by a quality inspection department for the same-type parts. For example, the measured data output for the same-type parts may be measured dimensions of the parts.

The first machining condition data can refer to the machining parameters obtained by the process database establishment apparatus while a CNC machine tool machines a same-type part under conditions that factors such as the machining environment, machining equipment status, and machining load are determined. In some application scenarios, the first machining condition data can refer to cutting parameters obtained by the process database establishment apparatus during the machining of a same-type part. In some other application scenarios, the first machining condition data can also refer to actual parameters in the final product that correspond to design parameters, where the final product is obtained by machining a same-type part using the design parameters. For example, the design parameters can refer to the geometric or material properties of the same-type part in the final product.

The first machining condition data may include multiple data types. The first machining condition data may include cross-correlated first workpiece data, first environmental data, first machining equipment data, and first machining load data.

Specifically, the first workpiece data, the first environment data, the first machining equipment data, and the first machining load data are the four data types in the first machining condition data.

The term "cross-correlated" as used herein can refer to the process of correlating or associating data of different data types in the first machining condition data through preset relationships or common attributes, or it can refer to the process of correlating or associating data of the same data type in the first machining condition data through preset relationships or common attributes.

It should be understood that, within the historical machining data corresponding to same-type parts of the first workpiece, the first machining condition data and the first quality data can be correlated. This correlation can be achieved by grouping the first machining condition data and the first quality data together. In some application scenarios, the first workpiece data, first environmental data, first machining equipment data, and first machining load data within the first machining condition data exhibit a cross-correlation relationship. In some other application scenarios, for each data type within the first machining condition data, the data within each data type exhibit a cross-correlation relationship.

The first workpiece data may include geometric characteristic parameters and material characteristic parameters corresponding to the same-type parts. Specifically, for each same-type part, the data corresponding to each actual parameter may be different.

The geometric characteristic parameters can refer to numerical values corresponding to the overall shape, size, surface, and topological characteristics of the same-type parts. The geometric characteristic parameters can include geometric characteristic data of individual components within the same-type part. Different components within the same-type part can correspond to different geometric characteristic data.

In some application scenarios, the geometric characteristic data may include geometric shapes and geometric tolerances corresponding to different components within the same-type part.

The geometric tolerances can be associated with and specify the permissible variation in length, width, angle, and diameter of each component. The geometric tolerances can also be associated with and specify the permissible variation in a ratio or product of various parameters among length, width, angle, and diameter; for example, the geometric tolerances can be associated with and specify the permissible variation in aspect ratio, depth-to-width ratio, or depth-to-diameter ratio. The material characteristic parameters can refer to the numerical values corresponding to the overall material characteristics of same-type parts of the first workpiece. The material characteristic parameters can include the material characteristic data of various components within parts of the same type as the first workpiece.

Within the same-type part, different components may correspond to different material characteristic data. In some application scenarios, the material characteristic data may include data related to materials used in the machining of same-type part. For example, the material characteristic data may include material cutting data corresponding to material machinability. It is to be understood that when machining the same batch of same-type parts, each same-type part may correspond to different material characteristic data.

The first environmental data can refer to parameters corresponding to the external environmental requirements that need to be met when machining same-type parts. Specifically, the first environmental data can include machining temperature data, machining humidity data, and cutting fluid data for machining parts of the same type as the first workpiece.

The first machining equipment data can refer to parameters corresponding to requirements that a CNC machine tool or a machine tool needs to meet when machining the same-type parts.

For example, the first machining equipment data may include machine tool characteristic data, fixture characteristic data, and cutting tool characteristic data corresponding to same-type parts.

The machine tool characteristic data can refer to the level of precision a machine tool can achieve during machining or the stiffness performance of a machine tool under different stress conditions during machining. The machine tool characteristic data can include machine tool accuracy data, such as static stiffness data and dynamic stiffness data. It is understandable that the dynamic stiffness data of a machine tool can change after the machine tool has worn down after machining the same-type parts.

The fixture characteristic data can refer to parameters corresponding to the fixtures required for machining same-type parts on a machine tool. A machine tool fixture is a device used to fix same-type parts and maintain them in the required position and orientation. The fixture characteristic data can include fixture accuracy data and fixture static stiffness data.

The tool characteristic data can refer to parameters corresponding to the cutting tools required for machining the same-type parts on a machine tool. The tool characteristic data can include tool sharpness data indicative of the sharpness of the cutting tool, and tool wear data indicative of the degree of tool wear.

The first machining load data can refer to various machining parameters and control condition parameters that need to be set for various components of the machine tool during the machining of the same-type parts.

For example, the components of the machine tool can include a spindle drive assembly and a feed drive assembly. The spindle drive assembly can be a motor, an upper bearing seat, a lower bearing seat, etc. The feed drive assembly can be a guide rail, a slide, a motor, a near-end bearing seat, and a far-end bearing seat. The first machining load data can include process parameter data and process response data of the machining system. The process parameter data can refer to machining parameter data related to the various components of the machine tool. In some application scenarios, the process parameter data can include actual spindle speed data, actual feed rate data, actual cutting width data, and actual cutting depth data. The process parameter data can also include a ratio between or product of each parameter data in the actual spindle speed data, actual feed rate data, actual cutting width data, and actual cutting depth data, for example, data of feed per revolution and material removal rate data. The process response data can include actual spindle power signals and actual component vibration signals generated during the machining of same-type parts.

In some application scenarios, the first workpiece data may include geometric characteristic data and material characteristic data.

Specifically, the geometric characteristic data in the first workpiece data may include: the characteristic geometric shapes and geometric tolerances corresponding to different components of parts of the same type as the first workpiece. The material characteristic data in the first workpiece data may include material cutting data corresponding to the same-type parts. The first environmental data may include machining temperature data, machining humidity data, and cutting fluid data for machining the same-type parts. The first machining equipment data may include machine tool characteristic data, fixture characteristic data, and tool characteristic data corresponding to the same-type parts.

Specifically, the machine tool characteristic data in the first machining equipment data may include: machine tool accuracy data, machine tool static stiffness data, and machine tool dynamic stiffness data corresponding to same-type parts. The fixture characteristic data may include fixture accuracy data and fixture stiffness data corresponding to same-type parts. The tool characteristic data may include tool sharpness data and tool wear data corresponding to same-type parts. The first machining load data may include process parameter data and process response data of the machining system corresponding to same-type parts.

Step S12: machining the first workpiece according to the historical machining data.

The process database establishment apparatus can machine the first workpiece based on the historical machining data.

In some application scenarios, after the process database establishment apparatus determines the historical machining data, when machining the first workpiece, the process database establishment apparatus can select at least a portion of the historical machining data to machine the first workpiece.

It is understandable that although the first workpiece and the same-type part are parts of the same type, the workpiece data required for the first workpiece may be different from that of a workpiece corresponding to the same-type part.

For example, the geometric requirements for the dimensions or shape of the first workpiece may differ in the required geometric characteristic data. The cross-related machining load data corresponding to different geometric requirements may also differ. Parts of different sizes or shapes may require different machining parameters such as cutting depth cut, cutting speed, and feed rate to meet dimensional and geometric requirements. In other application scenarios, after the process database establishment apparatus determines the historical machining data, when machining the first workpiece, if the first workpiece requires the same workpiece data as the same-type parts, the process database establishment apparatus can select all the historical machining data to machine the first workpiece.

Step S13: acquiring first real-time machining data of the first workpiece machined, the first real-time machining data including second machining condition data and second quality data.

The process database establishment apparatus can acquire first real-time machining data of the first workpiece machined. The first real-time machining data can refer to real-time machining parameters contained in the final product corresponding to the first workpiece, the final product being obtained by machining the first workpiece using the historical machining data corresponding to the same-type parts.

The first real-time machining data may include the second machining condition data and the second quality data. The second quality data may refer to the quality result of the final product corresponding to the parts of the same type as the first workpiece.

Specifically, the second quality data can refer to evaluation or judgment results made on the quality of the workpiece based on the inspection and testing of measured data output by a quality inspection department for the final product of the first workpiece.

The second machining condition data can refer to the real-time machining parameters obtained by the process database establishment apparatus when the CNC machine tool machines the first workpiece under conditions jointly determined by factors such as the machining environment, machining equipment status, and machining load.

The second machining condition data may include multiple data types. For example, the second machining condition data may include cross-correlated second workpiece data, second environmental data, second machining equipment data, and second machining load data.

Step S14: comparing the historical machining data with the first real-time machining data.

The process database establishment apparatus can compare the historical machining data with the first real-time machining data.

Specifically, the process database establishment apparatus can perform a data difference comparison between the historical machining data corresponding to the same-type parts and the first real-time machining data corresponding to the first workpiece, thereby obtaining comparison results.

The comparison results can be whether there is a difference between the historical machining data and the first real-time machining data, or a difference value between the historical machining data and the first real-time machining data. Based on the difference value, it can be determined whether there is a difference between the historical machining data and the first real-time machining data.

In some application scenarios, the above difference value can be 0, which can indicate that the comparison results are that there is no difference between the historical machining data and the first real-time machining data.

In other application scenarios, the process database establishment apparatus can be configured with a preset deviation threshold. For example, the preset deviation threshold can be 0.1. If the comparison results show a difference value of 0.01, the difference value of 0.01 can indicate that there is no difference between the historical machining data and the first real-time machining data.

Step S15: correcting or updating the first database based on the comparison results.

The process database establishment apparatus can correct or update the first database based on the comparison results.

Specifically, the process database establishment apparatus can, in response to comparison results that there is a difference between the historical machining data and the first real-time machining data, use the first real-time machining data of the first workpiece to correct or update the historical machining data corresponding to the same-type parts in the first database.

In some application scenarios, correcting the first database based on the comparison results can comprise correcting the historical machining data in the first database to the first real-time processed data.

In other application scenarios, updating the first database based on the comparison results can comprise adding the first real-time machining data to the historical machining data. It is to be understood that adding the first real-time machining data to the historical machining data yields updated historical machining data, which can then be used as the machining parameters for a next first workpiece.

In some application scenarios, after obtaining the comparison results, the process database establishment apparatus, in response to the comparison results meeting preset upload conditions, periodically uploads the first real-time machining data to the first database in the cloud via a network transmission protocol, so as to correct or update the first database. The preset upload conditions may be that there is a difference between the historical machining data and the first real-time machining data.

The above solution determines, from the first database, historical machining data obtained from machining same-type parts based on the first machining objective of the first workpiece, machines the first workpiece according to the historical machining data, obtains the first real-time machining data of the first workpiece machined, compares the historical machining data with the first real-time machining data to obtain comparison results, and correct or update the first database based on the comparison results. Compared with directly adding the machining conditions set according to experience to the database, this application can improve the referenceability and accuracy of each data in the first database by correcting or updating the first database based on the comparison results.

In some embodiments, step S15 above may include the following steps:

First, determining that there is a difference between the second machining condition data and the first machining condition data, the second machining condition data including cross-correlated second workpiece data, second environmental data, second machining equipment data, and second machining load data.

Second, determining if the second quality data meet the preset conditions.

Finally, correlating the second quality data and the second machining condition data and adding the correlation data to the first database.

The second machining condition data include the cross-correlated second workpiece data, second environmental data, second machining equipment data, and second machining load data.

It is understandable that the data types of the cross-correlated second workpiece data, second environment data, second machining equipment data, and second machining load data in the second machining condition data of the first workpiece are the same as the data types of the cross-correlated first workpiece data, first environment data, first machining equipment data, and first machining load data in the first machining condition data of the same-type parts.

In some application scenarios, the data values of the cross-correlated second workpiece data, second environment data, second machining equipment data, and second machining load data in the second machining condition data may differ from the data values of the cross-correlated first workpiece data, first environment data, first machining equipment data, and first machining load data in the first machining condition data corresponding to the same-type parts.

For the data types in the second machining condition data and the second quality data of the first workpiece, please refer to the data types in the first machining condition data and the first quality data of the parts of the same type as the first workpiece, which will not be repeated here.

The process database establishment apparatus includes a difference determination module.

The difference determination module is used to determine whether there is a difference between the input data. The process database establishment apparatus inputs the first real-time data of the first workpiece and the historical machining data of same-type parts into the difference determination module. The difference determination module can determine whether there is a difference between the second machining condition data in the first real-time data and the first machining condition data in the historical machining data. In response to the difference between the second machining condition data and the first machining condition data satisfying a difference determination condition, the difference determination module outputs an output result indicating that there is a difference between the second machining condition data and the first machining condition data. The difference determination condition may be whether the difference value between the data corresponding to the second machining condition data and the data corresponding to the first machining condition data exceeds a preset deviation threshold, and the preset deviation threshold can refer to the range of difference value allowed by the difference determination module.

In some application scenarios, the difference determination module can determine that there is a difference between a portion of the data in the second machining condition data and a portion of the data in the first machining condition data of the same data type. It is understandable that the process database establishment apparatus can, as needed, allow the difference determination module to compare only the data types of high interest when comparing the second machining condition data with the first machining condition data. That is, the difference determination module can determine the difference between the second machining condition data and the first machining condition data based on partial difference comparisons. Therefore, performing partial difference comparisons on the data types of high interest can improve the efficiency of determining the difference between the second machining condition data and the first machining condition data.

In other application scenarios, the difference determination module can determine the difference, one by one, between each data item in the second machining condition data and its corresponding data item of the same data type in the first machining condition data. It is to be understood that this application does not limit the order of comparisons between the second machining condition data and the first machining condition data for different data types including the workpiece data, environmental data, machining equipment data, and machining load data. Specifically, when comparing the second machining condition data and the first machining condition data for the different data types one by one, the order of comparisons for the different data types can be a preset fixed order, a random order, or a weighted comparison order based on the data type weights set as required.

In some embodiments, the step of determining that there is a difference between the second machining condition data and the first machining condition data may include the following steps: determining a difference between the second workpiece data and the first workpiece data, determining a difference between the second environmental data and the first environmental data, determining a difference between the second machining equipment data and the first machining equipment data, and determining a difference between the second machining load data and the first machining load data.

The process of the difference determination module of the process database establishment apparatus determining that there is a difference between the second machining condition data and the first machining condition data can be a process of comparing the second machining condition data and the first machining condition data for various data types one by one.

It is understandable that, for the comparison, for each data type, between the second machining condition data and the first machining condition data, the difference determination module can also compare, one by one, sub-type data under each data type. For example, the sub-type data corresponding to the second workpiece data type in the second machining condition data can be the geometric characteristic data and material characteristic data. Specifically, the geometric characteristic data in the second workpiece data can include the characteristic geometric shapes and geometric tolerances corresponding to different components in the first workpiece. The material characteristic data in the second workpiece data can include the material cutting data corresponding to the first workpiece.

For example, the sub-type data corresponding to the second environmental data type in the second machining condition data can be the machining temperature data, machining humidity data, and cutting fluid data corresponding to the first workpiece.

For example, the sub-type data corresponding to the second machining equipment data in the second machining condition data can be the machine tool characteristic data, fixture characteristic data, and tool characteristic data corresponding to the first workpiece.

Specifically, the machine tool characteristic data in the second machining equipment data may include the machine tool accuracy data, machine tool static stiffness data, and machine tool dynamic stiffness data corresponding to the first workpiece. The fixture characteristic data may include the fixture accuracy data and fixture static stiffness data corresponding to the first workpiece. The tool characteristic data may include the tool sharpness data and tool wear data corresponding to the first workpiece.

For example, the sub-type data corresponding to the second machining load data type in the second machining condition data may include the process parameter data and process response data of the machining system corresponding to the first workpiece. For the data types in the first machining condition data corresponding to parts of the same type as the first workpiece and the sub-type data corresponding to the data types in the first machining condition data, reference can be made to the description above, which will not be repeated here.

It is understandable that when the difference determination module performs the one-by-one difference comparisons between the second machining condition data and the first machining condition data, the data types in the second machining condition data and the first machining condition data are the same. The sub-type data under each data type in the second machining condition data and the first machining condition data are of the same sub-type. For example, when the difference determination module performs the one-by-one difference comparisons between the second machining condition data and the first machining condition data, the difference determination module may determine the difference between the process response data in the second machining load data of the first workpiece and the process response data in the first machining load data of the part of the same type as the first workpiece.

In some application scenarios, the one-by-one difference comparisons performed by the difference determination module can determine the difference between the second workpiece data and the first workpiece data.

For example, the one-by-one difference comparisons performed by the difference determination module can determine the difference between the sub-type data of the second workpiece data and the sub-type data of the first workpiece data.

In some application scenarios, the one-by-one difference comparisons performed by the difference determination module can determine the difference between the second environment data and the first environment data.

For example, the one-by-one difference comparisons performed by the difference determination module can determine the difference between the sub-type data of the second environment data and the sub-type data of the first environment data.

In some application scenarios, the one-by-one difference comparisons performed by the difference determination module can determine the difference between the second machining equipment data and the first machining equipment data.

For example, the one-by-one difference comparisons performed by the difference determination module can determine the difference between the sub-type data of the second machining equipment data and the sub-type data of the first machining equipment data.

In some application scenarios, the one-by-one difference comparisons performed by the difference determination module can determine the difference between the second machining load data and the first machining load data.

For example, the one-by-one difference comparisons performed by the difference determination module can determine the difference between sub-type data of the second machining load data and the sub-type data of the first machining load data. It is to be understood that the order of the one-by-one difference comparisons is not limited in this application.

Understandably, by performing difference comparisons, one by one, between the second machining condition data and the first machining condition data, the comparison results output by the difference determination module can be more accurate, which can improve the accuracy of the process database establishment apparatus in correcting or updating the data in the first database.

In some embodiments, the step of determining the difference between the second machining equipment data and the first machining equipment data may include the following steps: first, acquiring historical operation and maintenance data and current operation and maintenance data, wherein the historical operation and maintenance data is acquired from the first database and used to correspond to the first machining equipment data, and the current operation and maintenance data is acquired by performing preventive maintenance operations before machining the first workpiece, and is used to correspond to the second machining equipment data; second, comparing the historical operation and maintenance data and the current operation and maintenance data to obtain a difference between the second machining equipment data and the first machining equipment data.

The historical operation and maintenance data is obtained from the first database and used to correspond to the first machining equipment.

It is understandable that the historical operation and maintenance data can refer to data obtained by performing preventive maintenance operations before machining the same-type part, and the data is uploaded to the first database through the process database establishment apparatus.

The current operation and maintenance data can refer to data obtained by performing preventive maintenance operations before machining the first workpiece. The current operation and maintenance data can be used to correspond to the second machining equipment data.

It is understandable that the second machining equipment data may include operation and maintenance data. The preventive maintenance operations can refer to relatively simple, standard machine tool operations designed by engineers. These preventive maintenance operations can be performed periodically by the CNC machine tool user. For example, the preventive maintenance operations can be rotating the spindle at several specified speeds for a fixed duration, or reciprocating the worktable at several specified speeds for a fixed duration.

The current operation and maintenance data can be parameters of various components in the machine tool when machining the first workpiece.

For example, the current operation and maintenance data can be machine tool response after these operations are performed, which is collected through sensors. The current operation and maintenance data can include vibration data and temperature data of the spindle drive assembly, vibration data and temperature data of the feed drive assembly, power data and current data of the spindle drive system, and power data and current data of the feed drive system.

The difference determination module can compare the historical operation and maintenance and the current operation and maintenance data to obtain the difference between the second machining equipment data and the first machining equipment data. It is to be understood that if the difference determination module determines a data difference between the historical operation and maintenance data and the current operation and maintenance data, it will use the difference between the historical operation and maintenance data and the current operation and maintenance data as the difference between the second machining equipment data and the first machining equipment data.

In some application scenarios, responsive to the difference between the second machining equipment data and the first machining equipment data satisfying the above-mentioned difference determination condition, the process database establishment apparatus acquires the current accuracy data of various components of the machine tool, which is collected by detection equipment performing accuracy detection prior to machining of the first workpiece. The process database establishment apparatus takes the current accuracy data as the second machining equipment data, for being subsequently uploaded to the first database.

Accuracy detection may refer to the collection of data using the detection equipment (such as laser interferometers, force hammers, etc.) when the machine tool performs pre-designed, complex, and specialized machine tool operations. Accuracy detection can be completed by operations of a detection party. For example, the second machining equipment data for the first workpiece may include current accuracy data. Specifically, the current accuracy data may be a linear positioning error, straightness error, runout and pitch angle error, or inter-axis perpendicularity error of feed axes in various directions measured by a laser interferometer, or a resonant frequency and mode shape of various components measured by a force hammer.

The process database establishment apparatus can determine whether the second quality data meet a preset condition after determining that there is a difference between the second machining condition data and the first machining condition data.

In some application scenarios, the second quality data can be an evaluation value obtained by evaluating the final product of the first workpiece by the quality inspection department according to product standards. The preset condition can be that the second quality data is greater than or equal to a preset quality value. If the second quality data is greater than or equal to the preset quality value, the final product obtained from machining the first workpiece is a conforming product. If the second quality data is less than the preset quality value, the final product obtained from machining the first workpiece is a nonconforming product. For example, the preset quality value can be 0.9. The second quality data can be 0.95, which can be used to indicate that the final product corresponding to the first workpiece is a conforming product. In this case, the second quality data of the first workpiece satisfies the preset condition.

When the second quality data meets the preset condition, the process database establishment apparatus correlates the second quality data with the second machining condition data and adds them to the first database.

In some application scenarios, that the process database establishment apparatus associates the second quality data and the second machining condition data can be that a cross-correlation relationship is established between the second quality data and the second machining condition data to obtain cross-correlation data groups.

The process database establishment apparatus performs an adding operation on the cross-correlation data group to add the cross-correlation data group to the first database. The cross-correlation relationship can be established by forming all possible combinations between data in a dataset corresponding to the second quality data and data in a data set corresponding to the second machining condition data, thereby resulting in the cross-correlation data groups. In other words, the cross-correlation relationship can be the result of combining each data item in the dataset corresponding to the second quality data with its corresponding data item in the dataset corresponding to the second machining condition data.

It can be considered that the process database establishment apparatus, by correlating the second quality data with the second machining condition data and adding them to the first database, can make the data of the various data types in the first database more complete and the corresponding values of the various data types in the first database more referential.

In some embodiments, the workpiece data in the first machining condition data and the workpiece data in the second machining condition data respectively include geometric characteristic data of each component when machining the first workpiece or a same-type part. The step of determining the difference between the second workpiece data and the first workpiece data may include the following steps:

First, for the geometric characteristic data of each component in the second machining condition data, establishing the relationship between the geometric characteristic data and other condition data and/or the second machining quality data corresponding to the geometric characteristic data to obtain a target correlation data group corresponding to the geometric characteristic data. The other condition data is the data in the second machining condition data other than the geometric characteristic data.

Secondly, for each target correlation data group, comparing the target correlation data group with one or more corresponding historical correlation data groups to obtain a difference between the target correlation data group and each historical correlation data group.

The geometric characteristic data in the first workpiece data of the first machining condition data can refer to the geometric characteristic parameters of various components when machining a part of the same type as the first workpiece. Similarly, the geometric characteristic data in the second workpiece data of the second machining condition data can refer to the geometric characteristic parameters of various components when machining the first workpiece. For the data type of each piece of geometric characteristic data in each piece of workpiece data and the sub-type data under that data type, reference can be made to the description above, which will not be repeated here.

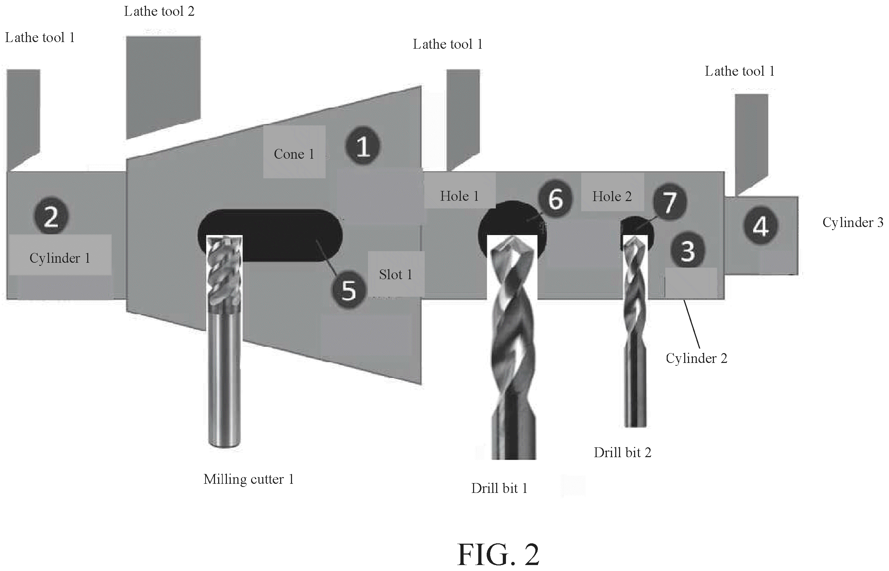

FIG. 2 illustrates a first workpiece in one embodiment of the method for establishing a process database provided in this application. The final product corresponding to the first workpiece is exemplarily shown in FIG. 2. In some application scenarios, part of the data types of the second machining condition data and the second quality data in the first real-time machining data corresponding to the first workpiece of FIG. 2 are shown in Table 1 below.

**Table 1**

| Geometric characteristic data | Tool characteristic data | Process parameter data | Process response data | Second quality data |
|---|---|---|---|---|
| Component 1 is a cone 1 with a major diameter A1 and a minor diameter B1 | Wear level data for lathe tool 2 is G1 | Spindle speed Z1; feed rate J1; depth of cut Q1 | Spindle power is W1 | Roughness is Y1 |
| Component 2 is cylinder 1, with a diameter C2 | Wear level data for lathe tool 1 is G2 | Spindle speed Z2; feed rate J2; depth of cut Q2 | Spindle power is W2 | Roughness is Y2 |
| Component 3 is a cylinder 2, with a diameter C3 | Wear level data for lathe tool 1 is G3 | Spindle speed Z3; feed rate J3; depth of cut Q3 | Spindle power is W3 | Roughness is Y3 |
| Component 4 is a cylinder 3, with a diameter C4 | Wear level data for lathe tool 1 is G4. | Spindle speed Z4; feed rate J4; depth of cut Q4 | Spindle power is W4 | Roughness is Y4 |
| Component 5 is slot 1, with a slot width D5 | Wear level data for milling cutter 1 is G5 | Spindle speed Z5; feed rate J5; depth of cut Q5 | Spindle power is W5 | Roughness is Y5 |
| Component 6 is a hole 1, with a hole diameter E6 | Wear level data for drill bit 1 is G6 | Spindle speed: Z6; Feed rate: J6; Depth of cut: Q6 | Spindle power is W6 | Roughness is Y6 |
| Component 7 is a hole 2, with a hole diameter E7 | Wear level data for drill bit 2 is G7 | Spindle speed Z7; feed rate J7; depth of cut Q7 | Spindle power is W7 | Roughness is Y7 |

As can be seen, the first real-time machining data corresponding to the first workpiece shown in Fig. 2 can be the geometric characteristic data in the second workpiece data, the tool characteristic data in the second machining equipment data, the process parameter data in the second machining load data, the process response data in the second machining load data, and the second quality data as shown in Table 1 above.

In some application scenarios, the machine tool characteristic data in the second machining equipment data corresponding to the first workpiece of Fig. 2 can be the same set of data. Specifically, the machine tool characteristic data can include an X-axis linear positioning accuracy M1, a Y-axis linear positioning accuracy M2, a Z-axis linear positioning accuracy M3, an X-axis straightness M4, a Y-axis straightness M5, and a Z-axis straightness M6.

In other application scenarios, the material characteristic data in the second workpiece data corresponding to the first workpiece of Fig. 2 can be the same set of data. Specifically, the material characteristic data can be the material brand parameter P1 and the material cutting data P2 of all components of the first workpiece.

For the geometric characteristic data of each component in the second machining condition data, the data other than the geometric characteristic data in the second machining condition data are other condition data. Specifically, the other condition data in the second machining condition data (i.e., excluding the geometric feature data of each component) can be at least one of the material characteristic data in the second workpiece data, the second environmental data, the second machining equipment data, and the second machining load data corresponding to that component.

For example, consider the first workpiece as shown in Fig. 2 and Table 1 above, for the geometric characteristic data of component 1 in the second machining condition data, the sub-type data in the geometric characteristic data of component 1 can include a shape of cone 1, a first dimension of major diameter A1, and a second dimension of minor diameter B1. The other condition data in the second machining condition data corresponding to component 1 (i.e., excluding the geometric characteristic data of component 1) can specifically be the tool characteristic data (wear degree data for lathe tool 2 is G1) in the second machining equipment data, the process parameter data (spindle speed is Z1; feed rate is J1; depth of cut is Q1) in the second machining load data, the process response data (spindle power is W1) in the second machining load data, the machine tool characteristic data (M1 to M6) in the second machining equipment data, and the material characteristic data (P1 and P2) in the second workpiece data. The second quality data for component 1 is the roughness data (roughness is Y1).

In some application scenarios, the process database establishment apparatus can establish cross-correlation relationships between each sub-type of data in the geometric characteristic data of component 1 and other condition data (i.e., excluding the geometric characteristic data of component 1) in the second machining condition data corresponding to component 1, thus obtaining the target correlation data groups corresponding to the geometric characteristic data of component 1.

In other application scenarios, the process database establishment apparatus can assign all the sub-type data in the geometric characteristic data of component 1 to the same geometric characteristic label, or assign a portion of the sub-type data in the geometric characteristic data of component 1 to the same geometric characteristic label.

The process database establishment apparatus establishes a cross-correlation relationship between the geometric characteristic label corresponding to component 1 and the other condition data (i.e., excluding the geometric characteristic data of component 1) in the second machining condition data corresponding to component 1, to obtain the target correlation data group corresponding to the geometric characteristic data of component 1. For example, each data item in the target correlation data group corresponding to component 1 can be the first row of Table 1 above, with each data item corresponding to component 1. The target correlation data group can be in the form of a table as shown in Table 1 above. Alternatively, the target correlation data group can be in a form where the geometric characteristic data of component 1 serves as a main node, while the other condition data (i.e., excluding the geometric characteristic data of component 1) in the second machining condition data corresponding to component 1, and the second quality data corresponding to component 1 serve as slave nodes, the process database establishment apparatus connects each node, and the main node corresponding to component 1 is connected to the main nodes of other components of the first workpiece.

In some application scenarios, for the geometric characteristic data of each component in the second machining condition data, a relationship is established between the geometric characteristic data and other condition data corresponding to the geometric characteristic data to obtain the target correlation data group corresponding to the geometric characteristic data. For the geometric characteristic data of each component in the second machining condition data, a relationship is established between the geometric characteristic data and the second machining quality data to obtain the target correlation data group corresponding to the geometric characteristic data. For the geometric characteristic data of each component in the second machining condition data, a relationship is established between the geometric characteristic data, and other condition data and the second machining quality data corresponding to the geometric characteristic data to obtain the target correlation data group corresponding to the geometric characteristic data. It can be considered that by using the target correlation data, the data presentation becomes clearer when users access the first database, improving the efficiency of searching for data within the first database.

It is to be understood that, for each component of the first workpiece, the first database stores multiple historical correlation data groups corresponding to the target correlation data of that component. For example, for component 1 of the first workpiece, the first database stores multiple historical correlation data groups corresponding to the target correlation data of component 1. Specifically, the difference determination module can obtain the target correlation data group corresponding to the geometric characteristic data in the second workpiece data corresponding to component 1.

The difference determination module can search for one or more historical correlation data groups corresponding to the target correlation data group of component 1 in the first database, based on the geometric characteristic data in the second workpiece data corresponding to component 1. The difference determination module compares the data in the target correlation data group with the data in the corresponding one or more historical correlation data groups to obtain the difference between the target correlation data group and each historical correlation data group. When the data group difference satisfies the above difference determination condition, the difference determination module outputs a result showing that there is a difference between the second machining condition data and the first machining condition data.

It is understandable that by determining whether there is a difference between the target correlation data group and each historical correlation data group, the difference determination module outputs the result that there is a difference between the second machining condition data and the first machining condition data, which can improve the difference determination efficiency of the process database establishment apparatus. Compared with difference determination without grouping, this application can optimize the path of calculating the difference.

In some embodiments, after comparing the target correlation data group with one or more corresponding historical correlation data groups for each target correlation data group to obtain the difference between the target correlation data group and each historical correlation data group, the step further includes the following step: adjusting the historical correlation data group corresponding to a target difference using the target correlation data group, to thereby obtain multiple current correlation data groups corresponding to the geometric characteristic data, wherein a difference between the historical correlation data group corresponding to the target difference and the target correlation data group is greater than or equal to a preset difference.

The target difference can be a difference value that exceeds the preset deviation threshold among the above difference determination conditions.

The difference between the historical correlation data group corresponding to the target difference and the target correlation data group is greater than or equal to a preset difference, wherein the preset difference may correspond to the preset deviation threshold in the above difference determination conditions.

After the difference determination module outputs a result showing a difference between the second machining condition data and the first machining condition data, the process database establishment apparatus can correct or update the first database based on this output result.

The output of the difference determination module that is received by the process database establishment apparatus also includes the differences of various data groups of the same component.

If there is a difference between the target correlation data group and the historical correlation data group, then the difference between the target correlation data group and the historical correlation data group is regarded as the target difference.

The process database establishment apparatus can identify a corresponding historical correlation data group in the difference comparison based on the target difference, and take the historical correlation data group corresponding to the target difference as a correlation data group to be adjusted.

The process of adjusting the historical correlation data group corresponding to the target difference using the target correlation data group can be that, for each geometric characteristic data, the process database establishment apparatus can adjust the correlation data group to be adjusted in the first database using the target correlation data group, to obtain multiple current correlation data groups corresponding to each geometric characteristic data.

In some application scenarios, adjusting the correlation data group to be adjusted using the target correlation data group can be achieved by using the target correlation data group to correct or update the correlation data group to be adjusted in the first database, thereby obtaining multiple current correlation data groups corresponding to each geometric characteristic data in the first database.

In other application scenarios, adjusting the correlation data group to be adjusted using the target correlation data group can be achieved by replacing the correlation data group to be adjusted in the first database with the target correlation data group, resulting in multiple current correlation data groups corresponding to each geometric characteristic data in the first database. The multiple current correlation data groups corresponding to each geometric characteristic data can then be stored in the first database.

It is understandable that adjusting the historical related data group corresponding to the target difference using the target related data group can improve the correction efficiency or update efficiency of the first database.

In some embodiments, after the above step of adjusting the historical correlation data group corresponding to the target difference using the target correlation data group to obtain multiple current correlation data groups corresponding to each geometric characteristic data, the method for establishing a process database further includes the following steps: first, for the geometric characteristic data of each component, selecting one group from the multiple current correlation data groups corresponding to the geometric characteristic data of the component as a correlation data group to be cleared, the other groups being regarded as baseline correlation data groups; second, based on each baseline correlation data group, determining an acceptable range for at least one piece of condition data; finally, in response to the condition data in the correlation data group to be cleared not being within the acceptable range, clearing the data group to be cleared from the first database.

In some application scenarios, the first database can periodically screen and remove unqualified data. If the first database reaches its capacity limit, the oldest data will be periodically removed to ensure that the data in the first database remains up-to-date.

For the geometric characteristic data of each component, one group is selected, as a correlation data group to be cleared, from the multiple current correlation data groups corresponding to the geometric characteristic data of that component in the first database, and the other groups are used as baseline correlation data groups.

The correlation data group to be cleared can refer to a current correlation data group that corresponds to the geometric characteristic data of a certain component of the first workpiece and is subject to periodic screening. The process database establishment apparatus uses all other current correlation data groups in the first database (i.e. excluding the correlation data group to be cleared) as the baseline correlation data groups.

The process database establishment apparatus can determine the acceptable range for at least one piece of condition data based on each baseline correlation data group. For example, for the machining load data in the correlation data group to be cleared, the process database establishment apparatus can determine the acceptable range for the machining load data based on the machining load data in each baseline correlation data group. The process database establishment apparatus can compare the machining load data in the correlation data group to be cleared with the acceptable range of machining load data, and in response to the machining load data in the correlation data group to be cleared not being within the acceptable range, the process database establishment apparatus clears the correlation data group to be cleared from the first database.

In other application scenarios, for example, for the machining load data and machining equipment data in the correlation data group to be cleared, the process database establishment apparatus can determine the acceptable range of the machining load data and the acceptable range of the machining equipment data based on the machining load data and machining equipment data in each baseline correlation data group. The process database establishment device can compare the machining load data in the correlation data group to be cleared with the acceptable range of the machining load data, and compare the machining equipment data in the correlation data group to be cleared with the acceptable range of the machining equipment data. In response to the machining load data in the correlation data group to be cleared not being within the acceptable range, or the machining equipment data in the correlation data group to be cleared being within the acceptable range, the process database establishment apparatus either clears the machining load data in the data group to be cleared from the first database or clears the correlation data group to be cleared from the first database.

Understandably, the first database can improve the referenceability of data by removing unqualified data or oldest data.

In some embodiments of the method for establishing a process database, the first database further includes a first machining label, which is used to label historical machining data obtained when machining a first workpiece or a part of the same type as the first workpiece under different machining optimization principles; the first machining objective includes a machining optimization principle; and the above step S11 may include the following: selecting a corresponding first machining label based on the machining optimization principle to obtain the historical machining data corresponding to the first machining label.

The machining optimization principle can be an efficiency-first principle, a cost-first principle, an energy-saving-first principle, a quality-first principle, or a fixed-cycle principle.

The efficiency-first principle can refer to an optimization objective of minimizing the machining time, where the corresponding optimization problem is to adjust the machining parameters to minimize the machining time.

The cost-first principle can refer to an optimization objective of minimizing the amount of money consumed, where the optimization problem is to adjust machining parameters to minimize the amount of money consumed in machining.

The energy-saving-first principle can refer to an optimization goal of minimizing the machine tool power, where the optimization problem is to adjust the machining parameters to minimize machine tool power.

The quality-first principle can refer to selecting the most reliable parameters and adjusting the machining parameters to ensure the quality of the final product of the first workpiece.

The fixed-cycle principle can refer to adjusting the machining parameters to control the entire machining time of the first workpiece within a given time.

The first database also includes a first machining label, which is used to label historical machining data obtained when machining the first workpiece or same-type parts under different machining optimization principles.

For example, for the historical machining data of a same-type part obtained when machining the same-type part using the cost-first principle, the process database establishment apparatus associates the historical machining data of the same-type part with the cost-first principle (the optimization principle used) through a first machining label or uses the cost-first principle as the first machining label, machining label and uses the first machining label as a grouping label corresponding to the historical machining data. The process database establishment apparatus stores the grouping label and the historical machining data corresponding to the grouping label together into the first database.

It is understandable that the first machining label is a single label. Based on the first machining label, the historical machining data of the same-type parts in the first database can be divided into groups corresponding to different first machining labels.

The process database establishment apparatus selects a corresponding first machining label based on the machining optimization principle to obtain the historical machining data corresponding to the first machining label.

For example, if the process database establishment device needs to prioritize the cost of the first workpiece during machining, it can use cost-first principle as the first machining objective and designate this first machining objective as the first machining label. The process database establishment apparatus then searches the first database for the first machining label corresponding to the same-type parts to obtain the historical machining data corresponding to the first machining label.

Understandably, obtaining the historical machining data for the same-type parts through the first machining label can reduce the time spent in searching for the historical machining data.

In some embodiments, the first database further includes a second machining label, which is used to label historical machining data obtained when machining the first workpiece or parts of the same type as the first workpiece under different multi-factor optimization principles. The multi-factor optimization principle includes multiple different machining optimization principles, and weights of the various machining optimization principles may be the same or different. Step S11 above may include the following steps: selecting a corresponding second machining label based on a multi-factor optimization principle to obtain the historical machining data corresponding to the second machining label.

In some application scenarios, if the various optimization principles have the same weight in the multi-factor optimization principle, the second machining label can be a label group obtained by combining multiple optimization principles.

For example, the efficiency-first principle, cost-first principle, energy-saving-first principle, quality-first principle, and fixed-cycle principle can be represented as R1, R2, R3, R4, and R5, respectively. The second machining label corresponding to the combined efficiency-first principle and the cost-first principle can be represented as R1+R2.

In other application scenarios, if the various optimization principles have different weights in the multi-factor optimization principle, the second machining label can be a label group obtained by combining multiple optimization principles and their respective weights. For example, if the weight of the efficiency-first principle is 0.3 and the weight of the cost-first principle is 0.7, then the second machining label corresponding to the combined efficiency-first principle and cost-first-first principle can be expressed as 0.3×R1+0.7×R2.

The process database establishment apparatus selects a corresponding second machining label based on a multi-factor optimization principle to obtain the historical machining data corresponding to the second machining label.

For example, when machining the first workpiece, the process database establishment apparatus needs to prioritize the cost and efficiency of the first workpiece. The process database establishment apparatus can use the cost-first principle and the efficiency-first principles as a second machining objective, and use the second machining objective as a second machining label. The second machining label can be represented as: the weight of the efficiency-first principle × R1 + the weight of the cost-first principle × R2. The process database establishment apparatus searches the first database for the second machining label corresponding to parts of the same type as the first workpiece, and obtains the historical machining data corresponding to the second machining label.

Understandably, obtaining the historical machining data corresponding to the parts of the same type as the first workpiece through the second machining label can reduce the time spent in searching for historical machining data.

In some embodiments, the step of selecting a corresponding second machining label based on a multi-factor optimization principle to obtain historical machining data corresponding to the second machining label may include the following steps: obtaining the weight of each optimization principle in the multi-factor optimization principle; determining candidate machining data corresponding to each optimization principle according to an optimization algorithm corresponding to each optimization principle; and obtaining historical machining data corresponding to the second machining label based on the weight of each optimization principle and the candidate machining data corresponding to each optimization principle.

The process database establishment apparatus can obtain the weight of each optimization principle in the multi-factor optimization principle.

The weights of various optimization principles in the multi-factor optimization can be preset in the first database or adjusted according to user needs. Different optimization principles correspond to different optimization objectives and algorithms, the algorithms including but not limited to: genetic algorithms, gradient descent, ant colony optimization, Pareto optimization, etc. Based on the optimization algorithms corresponding to the required optimization principles in the first machining objective of the first workpiece, the process database establishment apparatus can determine the candidate machining data corresponding to each optimization principle.

For example, the required optimization principles for the first machining objective of the first workpiece obtained by the process database establishment apparatus can be efficiency-first principle and cost-first principle, with the weight of efficiency-first principle being 0.2 and the weight of cost-first principle being 0.8. Based on respective optimization algorithms corresponding to the efficiency-first principle and the cost-first principle, the process database establishment apparatus determines the candidate machining data corresponding to the efficiency-first principle and the candidate machining data corresponding to cost-first principle in the first database, respectively.

The candidate machining data corresponding to the efficiency-first principle is the first candidate machining data, in which the value corresponding to the first machining load data may be a first value. The candidate machining data corresponding to the cost-first principle is the second candidate machining data, in which the value corresponding to the first machining load data may be a second value. The process database establishment apparatus can obtain historical machining data corresponding to the second machining label based on the weight of each optimization principle and the candidate machining data corresponding to each optimization principle. For each piece of candidate machining data, the process database establishment apparatus calculates the product of the candidate machining data and the weight of the optimization principle corresponding to the candidate machining data to obtain a candidate product. The process database establishment apparatus sums all the candidate products to obtain the sum of all candidate products, and uses this sum as the historical machining data corresponding to the second machining label. For example, the process database establishment apparatus multiplies the weight of the efficiency-first principle by the first candidate machining data to obtain a first product, and multiplies the weight of the cost-first principle by the second candidate machining data to obtain a second product. The process database establishment apparatus calculates the sum of the first product and the second product, and uses this sum as the historical machining data corresponding to the efficiency-first principle and the cost-first principle.

It is understandable that by using the multi-factor optimization principle as the second machining label, the acquired historical machining data corresponding to the second machining label can be more accurate and in line with the expectations during the machining of the first workpiece.

In some embodiments, the method for establishing the process database further includes the following steps: after correlating the machining label used during the machining of the first workpiece with the first real-time machining data for machining the first workpiece, the correlation data is added to the first database. The machining label can be the first machining label or the second machining label. The first machining label is used to label the historical machining data obtained when machining the first workpiece or same-type parts under different machining optimization principles, and the second machining label is used to label historical machining data obtained when machining the first workpiece or same-type parts under different multi-factor optimization principles.

The machining label used during the machining of the first workpiece can refer to the first machining label or the second machining label corresponding to the optimization principles required for machining the first workpiece. After acquiring the first real-time machining data of the first workpiece, the process database establishment apparatus can associate the machining label used during the machining of the first workpiece with the first real-time machining data of the first workpiece to obtain the first real-time machining data carrying the machining label. In some application scenarios, the process database establishment apparatus can directly add the first real-time machining data carrying the machining label into the first database. In other application scenarios, after step S15 above, the process database establishment apparatus adds the first real-time machining data carrying the machining label into the first database.

It is understandable that by adding the first real-time machining data carrying the machining label into the first database, the efficiency of storing the first real-time machining data in the first database or retrieving the first real-time machining data from the first database can be improved.

In some embodiments, the method for establishing a process database further includes the following steps: displaying an information input interface, the information input interface including a first area for users to input an optimization principle, a second area for users to input a first machining label, and a third area for users to input a second machining label; receiving information input in the first area, second area, and third area of the information input interface to obtain the first machining objective.

The information input interface can be a user interface displayed to the user by the process database establishment apparatus. The information input interface can also be a user interface for the user to confirm the first machining objective of the first workpiece. The information input interface can include multiple display areas. The first area of the information input interface can be a display area for the user to input the optimization principle. The first area can include multiple first sub-areas. It is to be understood that each first sub-area in the first area can correspond to a different optimization principle. The second area of the information input interface can be a display area for the user to input the first machining label. The third area of the information input interface can be a display area for the user to input the second machining label. It is to be understood that the third area can include multiple third sub-areas. Some third sub-areas can be used for the user to input the weights of different optimization principles. The process database establishment apparatus can receive the information input in the first, second, and third areas of the information input interface to obtain the first machining objective. In some application scenarios, in response to receiving the information input in each area of the information input interface, the process database establishment apparatus can determine the first machining objective for execution of the above step S11.

In some embodiments, step S13 may include the following steps: first, acquiring second machining condition data uploaded from an edge side during the machining of the first workpiece; then, receiving second machining quality data uploaded by a quality inspection data entry system, wherein the quality inspection data entry system is a system associated with the first database for entering quality data for each workpiece.

Edge-side upload can refer to the process where the process database establishment apparatus acquires data, which is collected by sensors or acquired by communicating with a control system, and saves the data as a file through an edge-side computer connected to the machine tool.

In some application scenarios, the file stored on the edge-side computer connected to the machine tool can be the second machining condition data of the first workpiece. The process database establishment apparatus acquires the second machining condition data uploaded from the edge side during the machining of the first workpiece. The quality inspection entry system is a system associated with the first database for entering the quality data of each workpiece. The quality inspection entry system can be a system capable of entering the second machining quality data of the first workpiece. The process database establishment apparatus receives the second machining quality data uploaded by the quality inspection entry system corresponding to the quality inspection department. After acquiring the second machining condition data and the second quality data, the process database establishment apparatus sequentially executes the above steps S14 and S15.

It is understandable that correcting or updating the first database with the second machining condition data and the second quality data can enrich the data types of the first database and make the first database more reliable for reference.

In the above scheme, based on a first machining objective of a first workpiece, historical machining data obtained from machining parts of the same type as the first workpiece is determined from the first database. First real-time machining data of the first workpiece machined according to the historical machining data is obtained. The historical machining data is compared with the first real-time machining data, and the first database is corrected or updated based on the comparison result. Compared with directly adding the machining conditions set according to experience to the database, this application can improve the referenceability and accuracy of various data in the first database by correcting or updating the first database based on the comparison result.

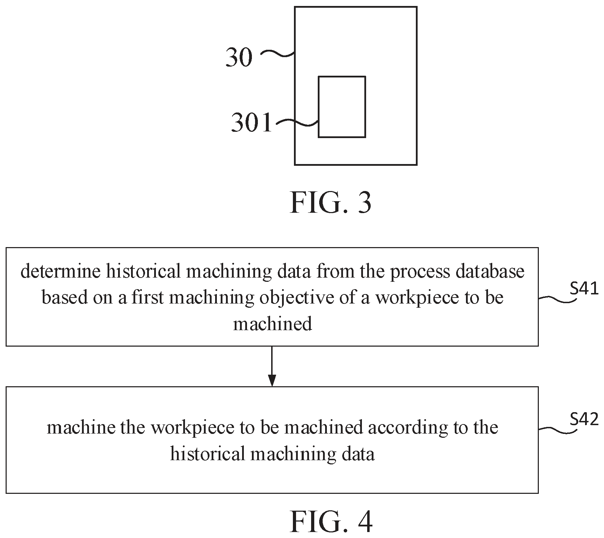

FIG. 3 illustrates a process database 30, which is established using any of the above -described methods for establishing a process database.

The process database 30 can be the first database mentioned above. The process database 30 can store historical machining data 301. In other embodiments, the process database 30 can also store other data. For the data that can be stored in the process database 30, reference can be made to the embodiments of the process database establishment method described above, which will not be repeated here. For the specific content included in the historical machining data 301, reference can be made to the embodiments of the process database establishment method described above, which will not be repeated here.

In some embodiments, the process database is established using the process database establishment method described above. It is to be understood that after step S15 of the process database establishment method described above, the process database establishment apparatus corrects or updates the first database based on the comparison result, thereby obtaining a new first database, and the process database establishment apparatus can use the new first database as the process database.

In the above scheme, based on a first machining objective of a first workpiece, historical machining data obtained from machining parts of the same type as the first workpiece is determined from the first database. First real-time machining data of the first workpiece machined according to the historical machining data is obtained. The historical machining data is compared with the first real-time machining data, and the first database is corrected or updated based on the comparison result. Compared with directly adding the machining conditions set according to experience to the database, this application can improve the referenceability and accuracy of various data in the first database by correcting or updating the first database based on the comparison result.

FIG. 4 is a schematic flowchart of an embodiment of a machining method provided in this application. Specifically, the machining method is applied to the process database described above. The machining method of this embodiment may include the following steps:
Step S41: determine historical machining data from a process database based on a first machining objective of the workpiece to be machined.

The workpiece to be machined is one of the parts of the same type as the first workpiece. The historical machining data is the data obtained when machining the same-type parts. The historical machining data includes first machining condition data and first quality data associated with the first machining condition data. The first machining condition data includes cross-correlated first workpiece data, first environmental data, first machining equipment data, and first machining load data.

For the above step S41, reference can be made to step S11 in the method for establishing the process database, which will not be repeated here.

Step S42: machining the workpiece to be machined based on the historical machining data.

For the process of above step S42, reference can be made to step S12 in the method for establishing the process database, which will not be repeated here.

It is understandable that, because the workpiece to be processed is one of the same-type parts, the processes of steps S41 and S42 above are the same as the processes of steps S11 and S12 in the method of establishing the process database.

In the above scheme, based on a first machining objective of a first workpiece, historical machining data obtained from machining parts of the same type as the first workpiece is determined from the first database. First real-time machining data of the first workpiece machined according to the historical machining data is obtained. The historical machining data is compared with the first real-time machining data, and the first database is corrected or updated based on the comparison result. Compared with directly adding the machining conditions set according to experience to the database, this application can improve the referenceability and accuracy of various data in the first database by correcting or updating the first database based on the comparison result.

In some embodiments, the machining method further includes the following steps: monitoring the real-time condition data of the workpiece to be processed; if the real-time condition data differs from any of the first workpiece data, first environmental data, first machining equipment data, and first machining load data, selecting data with the highest similarity exceeding the threshold from the process database based on the real-time condition data; and machining the workpiece using the data groups.

The workpiece to be processed in the machining method can refer to the first workpiece or a same-type part. The monitored real-time machining data of the workpiece to be machined can refer to the second machining data in the first real-time machining data corresponding to the first workpiece. The process database can refer to the first database. Furthermore, during the machining of the first workpiece, since the first database contains a large amount of real-time machining data, when a difference is detected between the real-time machining data and a certain item in the first machining data of the historical machining data, the current parameter is used as a label, a machining parameter with a higher similarity above a threshold than the current label can be selected from the process database, and the machining can be performed using this machining parameter, thereby achieving real-time parameter correction during the machining.

For example, the following data is selected from the historical machining data: environment temperature A1, tool wear B1, and machining quality C1. When machining the first workpiece, the acquired real-time environment temperature is A2 and the tool wear is B2. If the machining is performed using the original cutting parameters at this time, the quality may not meet expectations. Therefore, machining parameters with a higher similarity above the threshold than the real-time parameters are selected from the process database for correction, thereby achieving machining parameter correction during the machining process and significantly increasing machining accuracy.

In the above scheme, based on a first machining objective of a first workpiece, historical machining data obtained from machining parts of the same type as the first workpiece is determined from the first database. First real-time machining data of the first workpiece machined according to the historical machining data is obtained. The historical machining data is compared with the first real-time machining data, and the first database is corrected or updated based on the comparison result. Compared with directly adding the machining conditions set according to experience to the database, this application can improve the referenceability and accuracy of various data in the first database by correcting or updating the first database based on the comparison result.

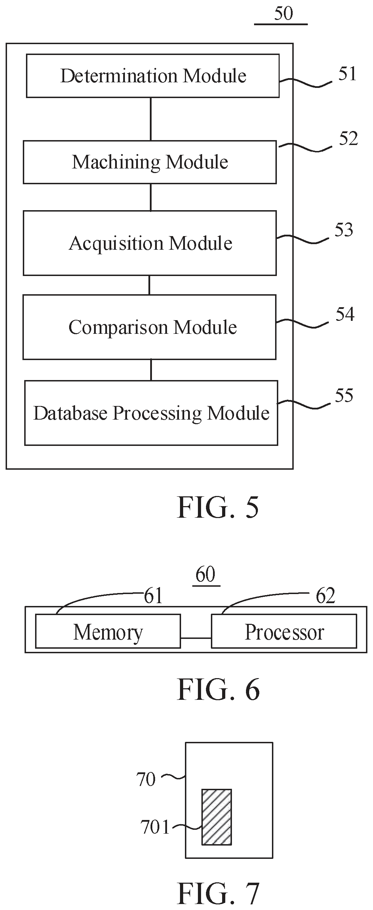

FIG. 5 is a schematic diagram of a process database establishment apparatus according to one embodiment of this application. The process database establishment apparatus 50 includes a determining module 51, a machining module 52, an acquiring module 53, a comparison module 54, and a database processing module 55. The determining module 51 is used to determine historical machining data from the first database based on the first machining objective of the first workpiece. The historical machining data refers to data obtained when machining same-type parts of the first workpiece. The historical machining data includes first machining condition data and first quality data associated with the first machining condition data. The first machining condition data includes cross-correlated first workpiece data, first environmental data, first machining equipment data, and first machining load data. The machining module 52 is used to machine the first workpiece according to the historical machining data. The acquiring module 53 is used to acquire first real-time machining data for machining the first workpiece. The first real-time machining data includes second machining condition data and second quality data. The comparison module 54 is used to compare the historical machining data with the first real-time machining data. The database processing module 55 is used to correct or update the first database based on the comparison result.

In the above scheme, based on a first machining objective of a first workpiece, historical machining data obtained from machining parts of the same type as the first workpiece is determined from the first database. First real-time machining data of the first workpiece machined according to the historical machining data is obtained. The historical machining data is compared with the first real-time machining data, and the first database is corrected or updated based on the comparison result. Compared with directly adding the machining conditions set according to experience to the database, this application can improve the referenceability and accuracy of various data in the first database by correcting or updating the first database based on the comparison result.

For details on the functions performed by each module, reference can be made to the method for establishing the process database described above, which will not be repeated here.

FIG. 6 illustrates a structure of a terminal device according to one embodiment of this application. The terminal device 60 includes a memory 61 and a processor 62. The processor 62 is used to execute a computer program stored in the memory 61 to implement the steps in the above-described embodiment of the process database establishment method or the steps in the above-described embodiment of the machining method. In a specific implementation scenario, the terminal device 60 may include, but is not limited to, a microcomputer or a server. In addition, the terminal device 60 may also include mobile devices such as laptops and tablets, which are not limited here.

Specifically, the processor 62 is configured to control itself and memory 61 to implement the steps in the above-described method embodiment for establishing the process database. The processor 6 2 can also be referred to as a central processing unit (CPU). The processor 62 can be an integrated circuit chip with signal processing capabilities. The processor 62 can also be a general-purpose processor, a digital signal processor (DSP), an application-specific integrated circuit (ASIC), a field-programmable gate array (FPGA), or other programmable logic device, discrete gate or transistor logic device, or discrete hardware component. A general-purpose processor can be a microprocessor or a conventional processor. Furthermore, the processor 62 can be implemented by integrated circuit chips.

In the above scheme, based on a first machining objective of a first workpiece, historical machining data obtained from machining parts of the same type as the first workpiece is determined from the first database. First real-time machining data of the first workpiece machined according to the historical machining data is obtained. The historical machining data is compared with the first real-time machining data, and the first database is corrected or updated based on the comparison result. Compared with directly adding the machining conditions set according to experience to the database, this application can improve the referenceability and accuracy of various data in the first database by correcting or updating the first database based on the comparison result.

FIG. 7 illustrates a structure of a computer-readable storage medium according to one embodiment of this application. The computer-readable storage medium 70 stores a computer program 701 thereon. The computer program 701, when executed by a processor, implements the steps in any of the above-described embodiments of the process database establishment method or the steps in the above-described embodiments of the machining method.

In the above scheme, based on a first machining objective of a first workpiece, historical machining data obtained from machining parts of the same type as the first workpiece is determined from the first database. First real-time machining data of the first workpiece machined according to the historical machining data is obtained. The historical machining data is compared with the first real-time machining data, and the first database is corrected or updated based on the comparison result. Compared with directly adding the machining conditions set according to experience to the database, this application can improve the referenceability and accuracy of various data in the first database by correcting or updating the first database based on the comparison result.

In some embodiments, the functions or modules of the apparatus provided in this disclosure can be used to perform the methods described in the above method embodiments. For the specific implementation, reference can be made to the description of the above method embodiments, which will not be repeated here for the sake of brevity.

The description of the various embodiments above tends to emphasize the differences between the various embodiments. The same or similar contents between the various embodiments can cross-reference each other, which will not be repeated here for the sake of brevity.

In the several embodiments provided in this application, the disclosed methods and apparatus can be implemented in other ways. For example, the apparatus implementations described above are merely illustrative. For instance, the division of modules or units is only a logical functional division, and in actual implementation, there may be other division methods. For example, units or components may be combined or integrated into another system, or some features may be ignored or not executed. Furthermore, the mutual coupling or direct coupling or communication connection shown or discussed may be through some interfaces; the indirect coupling or communication connection of devices or units may be in electrical, mechanical, or other forms.

Furthermore, the functional units in the various embodiments of this application can be integrated into one processing unit, or each unit can exist physically separately, or two or more units can be integrated into one unit. The integrated unit can be implemented in hardware or as a software functional unit.

If the integrated unit is implemented as a software functional unit and sold or used as an independent product, it can be stored in a computer-readable storage medium. Based on this understanding, the technical solution of this application, in essence, or the part thereof that contributes to the prior art, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods of various embodiments of this application. The storage medium includes various media capable of storing program codes, such as USB flash drives, portable hard drives, read-only memory (ROM), random access memory (RAM), magnetic disks, or optical disks.

## Claims

1. A method for establishing a process database, **characterized in that** it comprises the following steps:
determining historical machining data from a first database based on a first machining objective of a first workpiece, wherein the historical machining data is data acquired when machining a part of the same type as the first workpiece, the historical machining data comprises first machining condition data and first quality data associated with the first machining condition data, and the first machining condition data comprises cross-correlated first workpiece data, first environmental data, first machining equipment data, and first machining load data;
machining the first workpiece according to the historical machining data;
acquiring first real-time machining data of the first workpiece machined, wherein the first real-time machining data comprises second machining condition data and second quality data;
comparing the historical machining data with the first real-time machining data; and
correcting or updating the first database based on a comparison result.

2. The method for establishing a process database according to claim 1, **characterized in that** the step of correcting or updating the first database based on a comparison result comprises:
determining that there is a difference between the second machining condition data and the first machining condition data, wherein the second machining condition data comprises cross-correlated second workpiece data, second environmental data, second machining equipment data, and second machining load data;
if the second quality data satisfies a preset condition, correlating the second quality data with the second machining condition data and then adding them to the first database.

3. The method for establishing a process database according to claim 2, **characterized in that** the step of determining that there is a difference between the second machining condition data and the first machining condition data comprises:
determining a difference between the second workpiece data and the first workpiece data;
determining a difference between the second environmental data and the first environmental data;
determining a difference between the second machining equipment data and the first machining equipment data; and
determining a difference between the second machining load data and the first machining load data.

4. The method for establishing a process database according to claim 3, **characterized in that** the step of determining a difference between the second machining equipment data and the first machining equipment data comprises:
acquiring historical operation and maintenance data and current operation and maintenance data, wherein the historical operation and maintenance data is acquired from the first database and corresponds to the first machining equipment data, and the current operation and maintenance data is data acquired by performing a preventive maintenance operation before machining the first workpiece and corresponds to the second machining equipment data;
comparing the historical operation and maintenance data and the current operation and maintenance data to obtain the difference between the second machining equipment data and the first machining equipment data.

5. The method for establishing a process database according to claim 3, **characterized in that**:
the first workpiece data in the first machining condition data and the second workpiece data in the second machining condition data respectively comprise geometric characteristic data of various components when machining the first workpiece or a part of the same type as the first workpiece;
the step of determining a difference between the second workpiece data and the first workpiece data comprises:
for the geometric characteristic data of each of the components in the second machining condition data, establishing a relationship between the geometric characteristic data and other machining condition data and/or second processing quality data corresponding to the geometric characteristic data, to obtain target correlation data groups corresponding to the geometric characteristic data, wherein the other machining condition data is data in the second machining condition data other than the geometric characteristic data;
for each target correlation data group, comparing the target correlation data group with one or more corresponding historical correlation data groups to obtain a difference from each of the historical correlation data groups.

6. The method for establishing a process database according to claim 5, **characterized in that**:
after the step of, for each target correlation data group, comparing the target correlation data group with one or more corresponding historical correlation data groups to obtain a difference from each of the historical correlation data groups, the method further comprises:
adjusting the historical correlation data group corresponding to a target difference by using the target correlation data group, to obtain a plurality of current correlation data groups corresponding to each piece of geometric characteristic data, wherein a difference between the historical correlation data group corresponding to the target difference and the corresponding historical correlation data group is greater than or equal to a preset difference.

7. The method for establishing a process database according to claim 6, **characterized in that**:
after adjusting the historical correlation data group corresponding to the target difference by using the target correlation data group to obtain the plurality of current correlation data groups corresponding to each piece of geometric characteristic data, the method further comprises:
for the geometric characteristic data of each component, selecting one group from the plurality of current correlation data groups corresponding to the geometric characteristic data of the component as a correlation data group to be cleared, other groups being used as baseline correlation data groups;
determining an acceptable range for at least one piece of machining condition data based on each of the baseline correlation data groups; and
in response to the machining condition data in the correlation data group to be cleared not being within the acceptable range, clearing the correlation data group to be cleared from the first database.

8. The method for establishing a process database according to claim 1, **characterized in that**:
the first database further comprises a first machining label for labeling the historical machining data obtained when machining the first workpiece or a part of the same type as the first workpiece under different machining optimization principles;
the first machining objective comprises a machining optimization principle;
the step of determining historical machining data from the first database based on the first machining objective of the first workpiece comprises:
selecting a corresponding first machining label based on the machining optimization principle, to acquire the historical machining data corresponding to the first machining label.

9. The method for establishing a process database according to any one of claims 1 to 8, **characterized in that**:
the first database further comprises a second machining label for labeling the historical machining data obtained when machining the first workpiece or a part of the same type as the first workpiece under different multi-factor optimization principles, the multi-factor optimization principle comprises a plurality of different machining optimization principles, and a weight of each of the machining optimization principles is the same or different;
the step of determining historical machining data from the first database based on the first machining objective of the first workpiece comprises:
selecting a corresponding second machining label based on the multi-factor optimization principle, to acquire the historical machining data corresponding to the second machining label.

10. The method for establishing a process database according to claim 9, **characterized in that**, the step of selecting a corresponding second machining label based on the multi-factor optimization principle to acquire the historical machining data corresponding to the second machining label comprises:
acquiring the weight of each optimization principle of the multi-factor optimization principle;
determining candidate machining data corresponding to each optimization principle according to an optimization algorithm corresponding to each optimization principle; and
acquiring the historical machining data corresponding to the second machining label based on the weight of each optimization principle and the candidate machining data corresponding to each optimization principle.

11. The method for establishing a process database according to claim 10, **characterized in that**, the method further comprises the following step:
correlating the machining label used during the machining of the first workpiece with first real-time machining data of the first workpiece machined, and then adding the resulting correlation data to the first database;
wherein the machining label is the first machining label or the second machining label, the first machining label is used to label the historical machining data obtained when machining the first workpiece or a part of the same type as the first workpiece under different machining optimization principles, and the second machining label is used to label the historical machining data obtained when machining the first workpiece or a part of the same type as the first workpiece under different multi-factor optimization principles.

12. The method for establishing a process database according to claim 1, **characterized in that**, the method further comprises the following step:
displaying an information entry interface, the information entry interface comprising a first area for a user to input an optimization principle, a second area for a user to input a first machining label, and a third area for a user to input a second machining label;
receiving information input in the first area, the second area, and the third area of the information entry interface, to obtain the first machining objective.

13. The method for establishing a process database according to claim 1, **characterized in that**, the step of acquiring first real-time machining data of the first workpiece machined comprises:
acquiring second machining condition data uploaded from an edge side during machining of the first workpiece; and
receiving second machining quality data uploaded by a quality inspection entry system, the quality inspection entry system being a system associated with the first database for entering quality data of various workpieces.

14. A process database, **characterized in that** the process database is established using the method for establishing a process database according to any one of claims 1 to 13.

15. A machining method, **characterized in that** the machining method employs a process database according to claim 14, comprising:
determining historical machining data from the process database based on a first machining objective of a workpiece to be machined, wherein the workpiece to be machined is a part of the same type as the first workpiece, the historical machining data is data acquired when machining the part of the same type as the first workpiece, the historical machining data comprises first machining condition data and first quality data associated with the first machining condition data, and the first machining condition data comprises cross-correlated first workpiece data, first environmental data, first machining equipment data, and first machining load data; and
machining the workpiece to be machined according to the historical machining data.

16. The machining method according to claim 15, **characterized in that**, the method further comprises:
monitoring real-time machining condition data during the machining of the workpiece to be machined;
if the real-time machining condition data differs from any one of the first workpiece data, the first environmental data, the first machining equipment data, and the first machining load data, selecting a data group with a highest similarity exceeding a threshold from the process database based on the real-time machining condition data; and
machining the workpiece to be machined based on the data group.

17. An apparatus for establishing a process database, **characterized in that** it comprises:
a determination module, configured to determine historical machining data from a first database based on a first machining objective of a first workpiece, wherein the historical machining data is data acquired when machining a part of the same type as the first workpiece, the historical machining data comprises first machining condition data and first quality data associated with the first machining condition data, and the first machining condition data comprises first workpiece data, first environmental data, first machining equipment data, and first machining load data that are cross-correlated;
a machining module, configured to machine the first workpiece according to the historical machining data;
an acquisition module, configured to acquire first real-time machining data of the first workpiece machined, wherein the first real-time machining data comprises second machining condition data and second quality data;
a comparison module, configured to compare the historical machining data with the first real-time machining data; and
a database processing module, configured to correct or update the first database based on a comparison result.

18. A terminal device, **characterized by** comprising a memory, a processor, and a computer program stored in the memory and executable on the processor, wherein the processor, when executing the computer program, implements the method according to any one of claims 1 to 13 or implements the method according to any one of claims 15 to 16.

19. A computer-readable storage medium, **characterized in that** the computer-readable storage medium stores a computer program, and the computer program, when executed by a processor, implements the method according to any one of claims 1 to 13 or implements the method according to any one of claims 15 to 16.
